# FASCICULE DE BREVET EUROPEEN

(11) **EP 2 580 508 B1**
(45) Date de publication et mention de la délivrance du brevet: **07.07.2021**
(21) Numéro de dépôt: 11726866.4
(22) Date de dépôt: 18.05.2011
(51) Int. Cl.: F16K 37/00, F02D 9/10

(54) **ROBINET A CAPTEUR DE POSITION**
VENTIL MIT EINEM POSITIONSSENSOR
VALVE WITH A POSITION SENSOR

(30) Priorité: 09.06.2010 FR 1002436
(43) Date de publication de la demande: 17.04.2013
(73) Titulaire: KSB S.A.S, 92635 Gennevilliers Cedex (FR)
(72) Inventeur: DUBOY, Dominique, F-33170 Gradignan (FR); AMAGAT, Christophe, F-33000 Bordeaux (FR)
(74) Mandataire: Eidelsberg, Victor Albert
(86) Numéro de dépôt international: PCT/FR2011/000300
(87) Numéro de publication internationale: WO 2011/154620

(56) Documents cités:
- EP-A1- 0 148 046
- WO-A1-03/100950
- DE-A1-102004 001 837
- US-A- 4 004 560
- US-A- 4 663 601
- US-B1- 6 314 994
- None

## Description

Dans la détection et la signalisation de position des robinets à quart tournant, qu'ils soient à papillon, à boule ou à portion de sphère, de nombreuses solutions ont déjà été développées.

La plupart de ces solutions consistent à concevoir le robinet et son actionnement et à rajouter la détection sur l'organe de manœuvre. On trouve donc des détecteurs de position pour actionneur manuel ou pneumatique ou hydraulique, qui se montent sur une sortie d'arbre annexe, placée généralement à la partie supérieure de l'appareil ou latéralement.

Des solutions de ce type ont déjà été décrites dans les brevets Hitachi N° US2004/0085062 ou bien ASCO controls N° US6,242,909 ou ROTECH N° DE102008014400 et EP0965821 ou encore Peter Zovath N° US5278530.

Les inconvénients de telles solutions sont multiples :
- L'indication de position de l'arbre du robinet n'est pas directe. Elle est transférée via un nombre plus ou moins grand de pièces mécaniques qui peuvent défaillir, à commencer par l'arbre même du robinet qui peut casser alors même que l'indication de position par l'organe de manœuvre continue d'indiquer une position qui n'est plus celle de l'obturateur.
- Les indicateurs de position étant traités comme des accessoires, ils sont rajoutés aux organes de manœuvre en tant qu'options et offrent donc un encombrement souvent exagéré.
- Dans le cas de procédés industriels requérant un grand nombre de robinets dans un espace confiné, comme dans les industries pharmaceutiques ou agro-alimentaires, les raccordements électriques de tous ces détecteurs demandent beaucoup de temps de raccordement et sont la source d'un grand nombre d'erreurs de câblage. Ceci induit des coûts d'installation, de mise en œuvre et de réception des installations qui sont très importants.

D'autres solutions proposent d'installer les capteurs, soit sur le corps du robinet par des aménagements percés ou soudés, ou bien détectent la position de l'obturateur par des accessoires montés sur l'axe inférieur du robinet.

Des solutions de ce type ont déjà été décrites dans les brevets Keystone international N° GB2142710 ou bien I.C.I. N° US4468559.

Une autre solution a été décrite dans le brevet US-A-4 663 601.

Ces solutions nécessitent de modifier ou d'aménager le robinet.

L'invention se propose de pallier les défauts exposés ci-dessus en utilisant un robinet à quart tournant standard et son organe de manœuvre sans y apporter de modification. Dans un mode de conception nouveau, on propose de réaliser un capteur de position unique, qui puisse s'utiliser avec n'importe quel type d'organe de manœuvre que ce soit une poignée, un démultiplicateur manuel ou bien un actionneur automatique pneumatique, hydraulique ou électrique.

L'invention a pour objet un appareil de robinetterie comme défini dans la revendication 1.

En intercalant un capteur de position très mince de 1,5 à 4 millimètres d'épaisseur, qui n'est pas transmetteur de couple, tant dans la partie annulaire de la plaquette que dans le porte-cible, pour détecter la position de l'obturateur du robinet directement sur l'arbre de manœuvre et qui ne modifie en rien les modes de liaison et d'entraînement du robinet par l'organe de manœuvre, on assure une détection sans effet parasite et sans contact de la position en rotation de l'obturateur, cette position, interprétée par une électronique appropriée, pouvant être transmise au contrôle de processus, même si le dispositif d'étanchéité entre le papillon et le corps du robinet est métallique.

On n'a pas, suivant l'invention, d'accouplement supplémentaire qui, par le jeu obligatoire entre la pièce mâle et la pièce femelle, entraîne un défaut angulaire inévitable à chaque accouplement.

De préférence, au moins la partie annulaire de la plaquette et mieux toute la plaquette, et le porte-cible ont la même épaisseur. De préférence, la plaquette est entourée d'un porte-plaquette, dont l'épaisseur est plus grande que celle de la plaquette. Cela permet de faire en sorte que la face supérieure de la plaquette soit revêtue d'une résine jusqu'à affleurement avec la face supérieure du porte-plaquette. La résine protège la plaquette à circuit imprimé et l'immobilise. La plaquette peut comporter un trou débouchant dans un boîtier empli de résine disposé sous la face inférieure de la plaquette. On immobilise la plaquette et le porte-plaquette par la résine, qui est versée dans le boîtier et qui vient remplir tous les interstices jusqu'à affleurer le porte-plaquette pour y bloquer tous les composants. De même, la cible peut être bloquée dans le porte-cible par un surmoulage de résine.

Suivant un mode de réalisation, le porte-plaquette est fixé par pincement entre la platine fixe du robinet et la face d'appui de l'actionneur, notamment par des vis ou des boulons.

Le boîtier a une ouverture de raccordement d'un élément de transmission d'un signal électrique émis par les circuits imprimés de la plaquette. Cet élément peut être une antenne ou un connecteur.

Les détecteurs peuvent être, de préférence, des ampoules Reed ou des détecteurs à effet Hall, la cible étant dans ce cas un aimant. Les détecteurs peuvent être aussi des détecteurs de proximité inductifs, la cible étant dans ce cas un élément métallique à haute perméabilité magnétique. Les détecteurs peuvent être aussi des émetteurs de rayonnement et la cible être en un matériau opaque interrompant le rayonnement lorsqu'il est mis sur son trajet.

L'arbre peut avoir un méplat. Dans d'autres modes de construction, l'arbre peut prendre d'autres formes d'entraînement, comme une section en carré, en étoile, à cannelures ou à clavette.

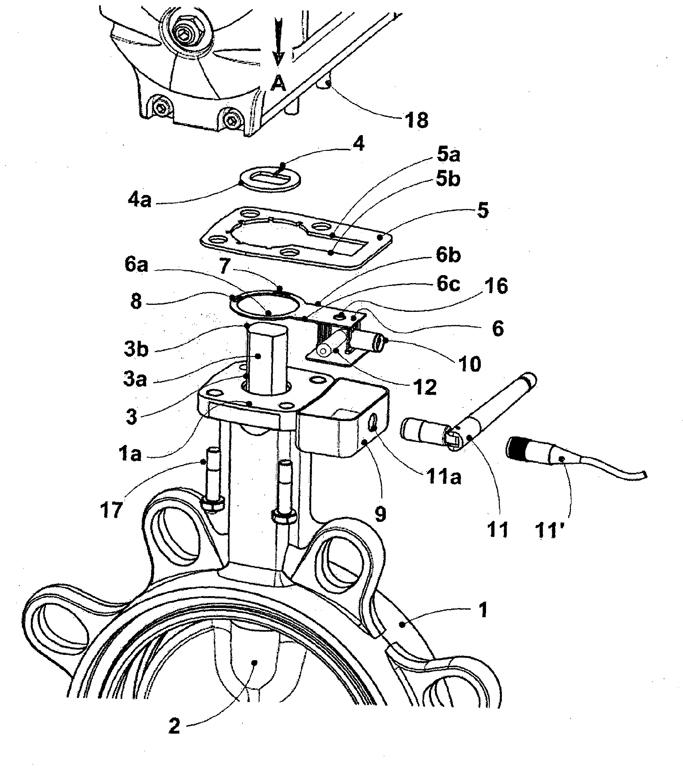

Au dessin annexé, donné uniquement à titre d'exemple, la figure unique est une vue en perspective éclatée d'un robinet suivant l'invention.

Le robinet représenté à la figure unique comprend un corps 1 de robinet annulaire, sur lequel est monté à rotation un obturateur 2 solidaire en rotation un arbre 3 qui est entraîné en rotation par un actionneur symbolisé par la flèche A et dont la section transversale présente deux côtés 3a rectilignes et parallèles, de manière à former des méplats, et deux côtés 3b arqués suivant un arc de cercle, les côtés 3a étant opposés entre eux et les côtés 3b étant opposés entre eux.

L'arbre 3 dépasse d'une platine la du corps 1.

Sur l'arbre 3, est emmanché un porte-cible 4a portant une cible 4, qui, dans le cas d'espèce, est un aimant. Le porte-cible 4a est annulaire, son trou central ayant un contour juste supérieur à la section transversale de l'arbre 3 et de même forme, en sorte que le porte-cible 4a peut coulisser sur l'arbre 3 et de fait jusqu'à venir en contact avec la platine la, mais ne peut pas tourner par rapport à celui-ci. Le porte-cible 4a est ainsi solidaire en rotation de l'arbre 3. Le porte-cible 4a a une épaisseur juste inférieure à l'épaisseur du porte-plaquette 5 décrit ci-dessus.

Autour du porte-cible 4a est positionnée, concentriquement à l'arbre 3, une plaquette 6 à circuit imprimé, qui est fixe par rapport à la platine la grâce au positionnement des faces rectilignes 6b et 6c en correspondance avec les faces rectilignes 5a et 5b du porte-plaquette 5. Cette plaquette porte deux ampoules 7, 8 Reed à 90° l'une de l'autre sur la circonférence de la partie 6a circulaire. Le trou de la partie 6a circulaire est plus grand que le contour extérieur du porte-cible 4a, de sorte que celui-ci peut y passer librement, sans contact.

Le porte-cible 4a et la partie 6a annulaire sont dans un même plan perpendiculaire à l'arbre 3. La partie 6a annulaire et la plaquette 6 ont chacune une épaisseur juste inférieure à l'épaisseur du porte-plaquette 5.

La plaquette 6 est entourée d'un porte-plaquette 5. L'épaisseur du porte-plaquette 5 est plus grande que celle de la plaquette 6. Suivant la taille de la platine la, et donc du porte-plaquette 5, elle est comprise entre 1,5 et 4 mm.

Un trou 16 traversant est ménagé dans la plaquette 6 et débouche dans le boîtier 9, lequel comporte une ouverture 11a de raccordement d'un fil 11 ou d'une antenne 11'.

Lorsque l'arbre 3 tourne de 90°, l'un des détecteurs 8, qui n'était pas en face de l'aimant 4, vient en face de celui-ci, tandis que l'autre 7, qui était en face de l'aimant 4, n'est plus en face de celui-ci. La plaquette 6 à circuit imprimé en élabore un signal électrique, qui est transmis, par l'intermédiaire du câble 11' ou de l'antenne 11 passant dans l'ouverture 11a du boîtier 9, à un dispositif d'exploitation de ce signal (non représenté).

Afin de pouvoir s'adapter à des robinets, dont les modes d'entraînement sont différents de l'entraînement par méplats, le trou central du porte-cible 4a peut être adapté à la section de l'arbre 3, qui peut être en forme d'étoile, de carré, à cannelures, à clavettes ou autre.

## Revendications

1. Appareil de robinetterie comprenant :
- un robinet à obturateur (2) solidaire en rotation d'un arbre (3) et traversant une platine (1a) fixe,
- un actionneur (A) entraînant l'arbre (3) en rotation, et
- un capteur annulaire de la position en rotation de l'arbre (3) emmanché sur l'arbre (3), où
- il n'y a qu'un seul accouplement de transmission du couple entre l'arbre (3) et l'actionneur (A),
- le capteur de position est supporté par la platine (1a) et comprend :
• un porte-cible (4a) annulaire, portant une cible (4) sensible à une action à distance et emmanchée sur l'arbre (3) de manière à en être solidaire en rotation et à pouvoir être déplacée en translation le long de cet arbre (3),
• une plaquette (6) enfilée sur l'arbre (3) par une partie (6a) annulaire sans en être solidaire en rotation, cette partie (6a) annulaire comportant, à 90° l'un de l'autre, deux détecteurs (7, 8) de la cible (4), et
- le porte-cible (4a) et la partie (6a) annulaire sont dans un même plan,
- le capteur est interposé, dans la direction longitudinale de l'arbre (3), entre le robinet à obturateur (2) et l'actionneur (A) et a une épaisseur, c'est-à-dire la dimension dans la direction longitudinale de l'arbre (3), comprise entre 1,5 at 4 mm.

2. Appareil de robinetterie suivant la revendication 1, **caractérisé en ce qu'**un porte-plaquette (5) entourant le capteur est pincé entre la platine fixe (1a) du robinet et la face d'appui de l'actionneur (A) par des moyens, qui rendent les trois pièces solidaires.

3. Appareil de robinetterie suivant la revendication 2, **caractérisé en ce que** la face supérieure de la plaquette (6) est revêtue d'une résine jusqu'à affleurement avec la face supérieure du porte-plaquette (5).

4. Appareil de robinetterie suivant l'une des revendications 1 à 3, **caractérisé en ce que** la plaquette (6) est percée d'un trou (16) débouchant dans un boîtier (9) empli de résine disposé sous la face inférieure de la plaquette.

5. Appareil de robinetterie suivant la revendication 4, **caractérisé en ce que** le boîtier (9) a une ouverture (11a) de raccordement d'un élément de transmission (11, 11') d'un signal électrique émis par des circuits imprimés de la plaquette (6).

6. Appareil de robinetterie suivant l'une des revendications 1 à 5, **caractérisé en ce que** la cible (4) est bloquée dans le porte-cible (4a) par un surmoulage de résine.

7. Appareil de robinetterie suivant la revendication 5, **caractérisé en ce que**, après introduction et polymérisation de la résine dans le boîtier (9) et jusqu'à affleurement avec la face supérieure du porte-plaquette (5), l'ensemble des composants, comprenant :
- le porte-plaquette (5), la plaquette (6), les capteurs (7, 8), le boîtier (9), une batterie (12), un connecteur (10) et une antenne (11),
sont liés et indissociables en formant un ensemble capteur (CP).

## Patentansprüche

1. Armatur, die enthält:
- ein Ventil mit Verschlussorgan (2), das in Drehung fest mit einer Welle (3) verbunden ist und eine ortsfeste Platte (la) durchquert,
- einen Stellantrieb (A), der die Welle (3) in Drehung antreibt, und
- einen Ringsensor der Drehstellung der Welle (3), der auf die Welle (3) aufgesteckt ist,
wobei
- es nur eine Übertragungskopplung des Drehmoments zwischen der Welle (3) und dem Stellantrieb (A) gibt,
- der Positionssensor von der Platte (la) getragen wird und enthält:
• einen ringförmigen Zielobjektträger (4a), der ein Zielobjekt (4) trägt, das für eine Ferneinwirkung empfindlich ist, und so auf die Welle (3) aufgesteckt ist, dass er in Drehung damit fest verbunden ist und entlang dieser Welle (3) in Translationsrichtung verschoben werden kann,
• ein Plättchen (6), das über einen ringförmigen Teil (6a) auf die Welle (3) aufgeschoben ist, ohne in Drehung fest mit ihr verbunden zu sein, wobei dieser ringförmige Teil (6a) im 90°-Abstand zueinander zwei Detektoren (7, 8) des Zielobjekts (4) aufweist, und
- der Zielobjektträger (4a) und der ringförmige Teil (6a) sich in einer gleichen Ebene befinden,
- der Sensor in Längsrichtung der Welle (3) zwischen das Ventil mit Verschlussorgan (2) und den Stellantrieb (A) eingefügt ist und eine Dicke, d.h. die Abmessung in der Längsrichtung der Welle (3), zwischen 1,5 und 4 mm hat.

2. Armatur nach Anspruch 1, **dadurch gekennzeichnet, dass** ein den Sensor umgebender Plättchenträger (5) zwischen die ortsfeste Platte (1a) des Ventils und die Auflageseite des Stellantriebs (A) durch Einrichtungen eingeklemmt ist, die die drei Bauteile fest miteinander verbinden.

3. Armatur nach Anspruch 2, **dadurch gekennzeichnet, dass** die Oberseite des Plättchen (6) bis zum bündigen Anliegen an der Oberseite des Plättchenträgers (5) mit einem Harz bedeckt ist.

4. Armatur nach einem der Ansprüche 1 bis 3, **dadurch gekennzeichnet, dass** ein Loch (16) in das Plättchen (6) gebohrt ist, das in ein mit Harz gefülltes Gehäuse (9) mündet, das unter der Unterseite des Plättchens angeordnet ist.

5. Armatur nach Anspruch 4, **dadurch gekennzeichnet, dass** das Gehäuse (9) eine Öffnung (11a) für den Anschluss eines Übertragungselements (11, 11') eines elektrischen Signals hat, das von gedruckten Schaltungen des Plättchens (6) gesendet wird.

6. Armatur nach einem der Ansprüche 1 bis 5, **dadurch gekennzeichnet, dass** das Zielobjekt (4) durch eine Übergussmasse von Harz im Zielobjektträger (4a) blockiert wird.

7. Armatur nach Anspruch 5, **dadurch gekennzeichnet, dass** nach der Einführung und Polymerisierung des Harzes im Gehäuse (9) und bis zum bündigen Anliegen mit der Oberseite des Plättchenträgers (5) die Einheit der Bauteile, enthaltend:
- den Plättchenträger (5), das Plättchen (6), die Sensoren (7, 8), das Gehäuse (9), eine Batterie (12), einen Verbinder (10) und eine Antenne (11),
verbunden und untrennbar sind, indem sie eine Sensoreinheit (CP) bilden.

## Claims

1. A valve comprising:
- a closure member (2) rotating in unison with a shaft (3) and passing through a fixed plate (1a),
- an actuator (A) driving the shaft (3) in rotation,
and
- an annular sensor of the rotational position of the shaft (3) fitted on the shaft (3),
in which
- there is only one single transmission coupling of the torque between the shaft (3) and the actuator (A),
- the position sensor is supported by the plate (1a) and comprises:
• an annular target-holder (4a) carrying a target (4) sensitive to an action at a distance and fitted on the shaft (3) in such a way as to rotate in unison therewith and to be able to be displaced in translation along the shaft (3),
• a small plate (6) fitted on the shaft (3) by way of an annular portion (6a) without being rotationally unified therewith, this annular portion (6a) containing two detectors (7, 8) of the target (4), at 90° one with respect to the other, and
- the target-holder (4a) and the annular portion (6a) are in the same plane,
- the sensor is interposed, in the longitudinal direction of the shaft (3), between closure member (2) and actuator (A) and the actuator (A) has a thickness, i.e. the dimension in the longitudinal direction of the shaft (3), between 1.5 and 4 mm.

2. A valve according to claim 1, in which the plate-holder (5) surrounds the sensor and is gripped between the fixed plate (1a) and a supporting face of the actuator (A) by means which makes them unified.

3. A valve according to claim 2, **characterised in that** the upper face of the small plate (6) is coated with a resin until it is flush with the upper face of the plate-holder (5).

4. A valve according to one of claims 1 - 3, **characterised in that** the small plate (6) contains a hole (16) opening into a casing (9) filled with resin arranged underneath the lower face of the small plate.

5. A valve according to claim 4, **characterised in that** the casing (9) has an opening (11a) for connection of an element for transmission of an electrical signal emitted by the printed circuits of the small plate (6).

6. A valve according to one of claims 1 - 5, **characterised in that** the target (4) is fixed in the target-holder (4a) by moulding resin thereon.

7. A valve according to claim 5, **characterised in that** after introducing and polymerising the resin in the casing (9) and until it is flush with the upper face of the plate-holder (5), all the components comprising:
- the plate-holder (5), the small plate (6), the detectors (7, 8), the casing (9), a battery (12), a connector (10) and an antenna (11),
are bound and not separable and form a sensor arrangement (CP).
